# EUROPÄISCHE PATENTSCHRIFT

(11) **EP 2 371 055 B1**
(45) Veröffentlichungstag und Bekanntmachung des Hinweises auf die Patenterteilung: **31.07.2013**
(21) Anmeldenummer: 09783730.6
(22) Anmeldetag: 05.10.2009
(51) Int. Cl.: H02P 23/00

(54) **VERFAHREN UND STEUERUNGSEINRICHTUNG ZUM ANSTEUERN EINES ELEKTROMOTORS**
METHOD AND CONTROL DEVICE FOR CONTROLLING AN ELECTRIC MOTOR
PROCÉDÉ ET DISPOSITIF D'EXCITATION D'UN MOTEUR ÉLECTRIQUE

(30) Priorität: 28.11.2008 DE 102008044161
(43) Veröffentlichungstag der Anmeldung: 05.10.2011
(73) Patentinhaber: Robert Bosch GmbH, 70442 Stuttgart (DE)
(72) Erfinder: HESSERT, Henrik, 76185 Karlsruhe (DE); VOGT, Richard, 77731 Willstaett (DE); SEEBACHER, Daniel, 91301 Forchheim (DE); HABERL, Nikolas, 76547 Sinzheim (DE); PODDEY, Christian, 76470 Oetigheim (DE)
(86) Internationale Anmeldenummer: PCT/EP2009/062884
(87) Internationale Veröffentlichungsnummer: WO 2010/060671

(56) Entgegenhaltungen:
- EP-A2- 1 050 611
- EP-A2- 1 383 232
- DE-A1-102005 024 068
- DE-B4- 10 082 533
- JP-A- 8 186 995
- JP-A- 2004 271 144
- US-A1- 2007 025 707

## Beschreibung

### Technisches Gebiet

Die Erfindung betrifft im Allgemeinen Verfahren und Vorrichtungen zur Ansteuerung eines Elektromotors, insbesondere in einem Lüfter, mittels einer Ansteuergröße.

### Stand der Technik

Leistungsstarke Elektromotoren (> 300W), welche beispielsweise in Motorkühlgebläsen verwendet werden, werden üblicherweise mit einem getakteten Spannungssignal angesteuert. Hierbei wird ein als Low-Side-Switch arbeitender Schalt-Feldeffekttransistor mit einem pulsweitenmodulierten Spannungssignal angesteuert.

In der Beschleunigungsphase wird der Elektromotor dabei mit einem Tastverhältnis angesteuert, das eine konstante zeitliche Änderungsrate aufweist, so dass der Lüfter innerhalb einer vorgegebenen Zeit auf eine Soll-Drehzahl beschleunigt wird. Dieses Sanftanlauf-Verfahren soll die Anlaufströme begrenzen und die mechanischen Belastungen des Elektromotors minimieren.

Das System aus Steuereinheit, Gebläsemotor, Lüfter und Luftströmung weist nichtlineare Eigenschaften auf, die zudem großen Streuungen unterliegen. Daher kann der Verlauf der Motordrehzahl und/oder des Motorstroms in der Beschleunigungsphase stark variieren. Bei einem herkömmlichen Sanftanlauf-Verfahren können daher bei einer zu hoch vorgegebenen Änderungsrate des Tastverhältnisses hohe mechanische Belastungen des Elektromotors und/oder hohe Werte des Motorstroms auftreten, während bei einer zu niedrig vorgegebenen Änderungsrate des Tastverhältnisses die Beschleunigungsdauer unangemessen lang wird.

Aus der Druckschrift DE 10 2005 024 068 ist nicht entnehmbar, eine Korrekturgröße bereitzustellen, die abhängig von einer Motorcharakteristik und abhängig von einer Ansteuergröße bestimmt wird, wobei die Motorcharakteristik eine Abhängigkeit einer Motorgröße von der Ansteuergröße beschreibt.

Die Druckschrift DE 10 082 533 offenbart ein Verfahren zur Einstellung einer Ist-Geschwindigkeit bei der Hubbewegung einer Fensterscheibe, wobei die Drehzahl eines die Fensterscheibe antreibenden Elektromotors gemäß einer Soll-Drehzahl geregelt wird.

Es ist Aufgabe der vorliegenden Erfindung, ein Verfahren, eine Steuerungseinrichtung und ein Programmprodukt bereitzustellen, die es ermöglichen, die Belastungen des Elektromotors und des Bordnetzes in der Beschleunigungsphase und gleichzeitig die Beschleunigungsdauer zu minimieren.

### Offenbarung der Erfindung

Zur Lösung der oben genannten Aufgabe stellt die vorliegende Erfindung ein Verfahren nach Anspruch 1 zur Ansteuerung eines Elektromotors, insbesondere in einem Lüfter, mittels einer Ansteuergröße bereit, mit folgenden Schritten:
- Bereitstellen einer Stellgröße, die einen zeitlichen Verlauf aufweist;
- Bestimmen eines Korrekturwerts abhängig von einer vorgegebenen Motorcharakteristik, die eine Abhängigkeit einer Motorgröße von der Ansteuergröße beschreibt, und abhängig von der Ansteuergröße; und
- Anpassen des zeitlichen Verlaufs der Stellgröße abhängig von dem Korrekturwert, um die Ansteuergröße zu erhalten.

Bei dem erfindungsgemäßen Verfahren wird demnach eine Stellgröße, welche beispielsweise durch ein Tastverhältnis eines pulsweitenmodulierten Spannungssignals dargestellt wird, in Abhängigkeit sowohl von einer vorgegebenen Motorcharakteristik, als auch von dem bei der anliegenden Ansteuergröße auftretenden Verhalten einer Motorgröße angepasst. Somit kann der Elektromotor unter Berücksichtigung der Eigenschaften des Gesamtsystems aus Steuereinheit, Elektromotor und, im Falle des Vorhandenseins eines Lüfters, der Eigenschaften des Lüfters und der Luftströmung derart angesteuert werden, dass sowohl die Belastungen des Elektromotors und des Bordnetzes in der Beschleunigungsphase als auch die Beschleunigungsdauer minimiert werden.

Hierbei kann die Motorgröße eine Drehzahl des Elektromotors, einen Motorstrom, die induzierte Motorspannung, die Rippelspannung oder eine Funktion der Drehzahl und des Motorstroms und/oder der induzierten Motorspannung und/oder der Rippelspannung umfassen.

Der Korrekturwert kann von einer Differenz, einem Verhältnis oder einer Funktion einer bereitgestellten Ist-Motorgröße, die gemessen oder geschätzt werden kann, und der bei der Eingangs-Stellgröße gemäß der Motorcharakteristik sich ergebenden Motorgröße abhängen. Hierbei kann der Korrekturwert gemäß einer ersten Ausführungsform der vorliegenden Erfindung dazu verwendet werden, eine Steigung der Stellgröße anzupassen, oder der Korrekturwert kann gemäß einer zweiten Ausführungsform der vorliegenden Erfindung dazu verwendet werden, einen Wert der Stellgröße anzupassen, welcher gemäß einer Anfangsvorgabe für die Steigung bestimmt worden ist.

Wenn die Motorgröße eine Drehzahl des Elektromotors umfasst, kann die zeitliche Änderungsrate der Stellgröße erhöht werden, wenn die sich aus der Motorcharakteristik für das anliegende Tastverhältnis ergebende Drehzahl höher ist als die gemessene Ist-Drehzahl des Elektromotors. Hierdurch kann die Beschleunigungsdauer minimiert werden, indem bei einem Elektromotor, der beim Anfahren keinen übermäßigen Belastungen ausgesetzt ist und somit schnell hohe Drehzahlen erreicht, das Tastverhältnis schneller erhöht wird. Andererseits kann sichergestellt werden, dass beispielsweise bei einer ungünstigen Luftströmungsdynamik, die ein schnelles Hochfahren des Elektromotors verhindert, keine übermäßige Belastung des Bordnetzes auftritt, da das Tastverhältnis in diesem Fall langsamer erhöht wird.

Gemäß einem weiteren Aspekt ist eine Steuerungseinrichtung nach Anspruch 6 zum Ansteuern eines Elektromotors mittels einer Ansteuergröße vorgesehen, umfassend:
- eine Kennfeldeinheit, in der eine vorgegebene Motorcharakteristik, die eine Abhängigkeit einer Motorgröße von der Ansteuergröße beschreibt, bereitgestellt ist;
- eine Korrekturwert-Bestimmungseinheit zum Bestimmen eines Korrekturwerts abhängig von der Motorcharakteristik und abhängig von der Ansteuergröße; und
- eine Rampeneinheit zum Anpassen eines vorgegeben zeitlichen Verlaufs der Stellgröße abhängig von dem Korrekturwert, um die Ansteuergröße zu erhalten.

Mit einer derartigen Steuerungseinrichtung kann der Elektromotor gemäß dem erfindungsgemäßen Verfahren, wie oben beschrieben, angesteuert werden. Gemäß einem weiteren Aspekt ist ein Programmprodukt für eine Steuerungseinrichtung für einen Elektromotor zur Durchführung des oben beschriebenen erfindungsgemäßen Verfahrens vorgesehen.

### Kurzbeschreibung der Figuren

Die Erfindung wird nachfolgend anhand von Ausführungsbeispielen unter Bezugnahme auf beigefügte Zeichnungen näher erläutert. Es zeigen:
- Fig. 1: ein Blockschaltbild eines Motorsystems mit einer Steuerungseinrichtung zum Ansteuern eines Elektromotors;
- Fig. 2: ein Blockschaltbild eines weiteren Motorsystems mit einer Steuerungseinrichtung zum Ansteuern eines Elektromotors;
- Fig. 3: ein Beispiel für Drehzahl-Tastverhältnis-Kennfelder für unterschiedliche Elektromotoren; und
- Fig. 4: einen beispielhaften Verlauf des am Elektromotor anliegenden Tastverhältnisses beim Anfahren des Elektromotors.

### Beschreibung von Ausführungsformen

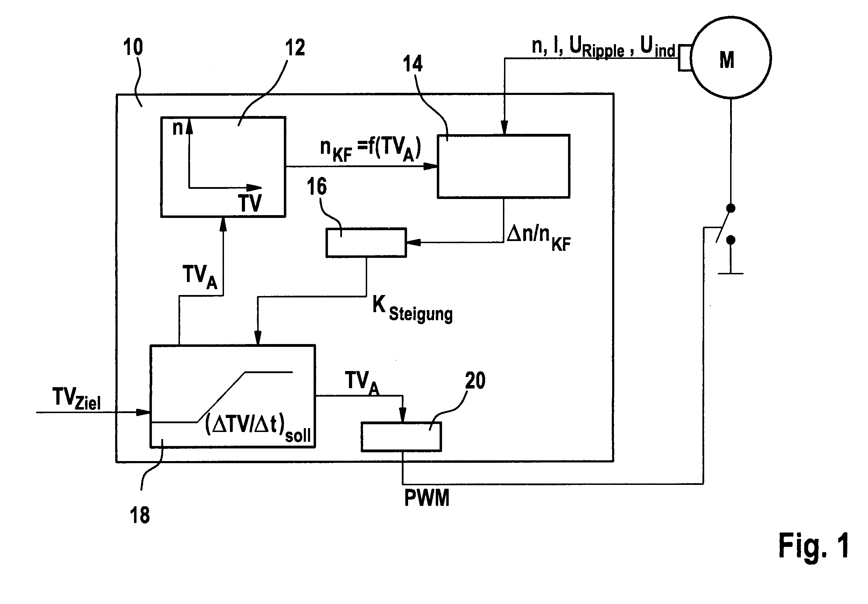

In Fig. 1 ist ein Motorsystem gezeigt, bei dem ein Elektromotor M, wie beispielsweise ein Lüftermotor eines Lüfters in einem Kraftfahrzeug, durch eine Steuereinheit 10 angesteuert wird. Die Steuereinheit 10 stellt ein pulsweitenmoduliertes Spannungssignal bereit, dessen Frequenz z.B. aus elektrischen Gründen zwischen 1 kHz und 100kHz liegen kann. Aus akustischen Gründen liegt die Frequenz des Spannungssignals typischerweise zwischen 18kHz und 25kHz. In der Beschleunigungsphase des Motors wird das Tastverhältnis TV des pulsweitenmodulierten Spannungssignals derart erhöht, dass der Elektromotor M innerhalb einer vorgegebenen Zeit auf eine Soll-Drehzahl beschleunigt wird.

Die Steuereinheit 10 umfasst eine Kennfeldeinheit 12 zum Bereitstellen eines Kennfelds, das eine Abhängigkeit der Drehzahl n vom Tastverhältnis TV des pulsweitenmodulierten Spannungssignals angibt, eine Differenzeinheit 14 zum Bestimmen einer Abweichung Δn der Ist-Drehzahl von der im Kennfeld für das anliegende Tastverhältnis gespeicherten Drehzahl, eine Korrekturwert-Bestimmungseinheit 16 zum Bestimmen eines Korrekturwerts K_{Steigung} für die zeitliche Änderung des Tastverhältnisses in Abhängigkeit von der Drehzahlabweichung, eine Rampeneinheit 18 zum Berechnen einer Rampenfunktion, die einen zeitlichen Verlauf des Tastverhältnisses TV in der Beschleunigungsphase des Elektromotors M angibt, und eine Modulationseinheit 20 zum Umwandeln des von der Rampeneinheit 18 ausgegebenen Tastverhältnisses TV_{A} in ein pulsweitenmoduliertes Spannungssignal PWM, mit dem der Elektromotor M angesteuert wird.

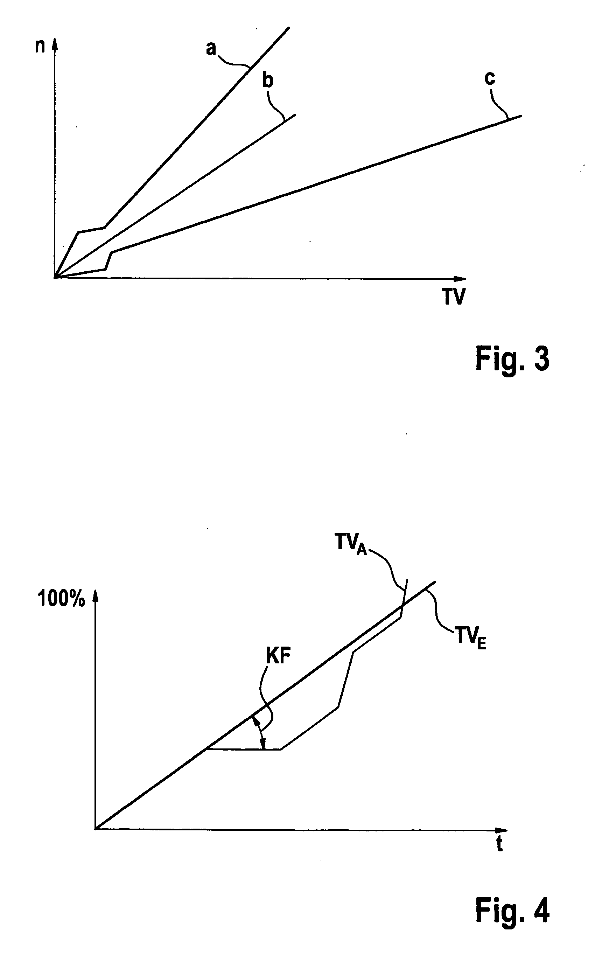

Für einen gegebenen Elektromotor M wird entsprechend der technischen Gegebenheiten, wie bspw. Größe, Gewicht, Leistung und gewünschte Drehzahl des Elektromotors M, ein ideales Drehzahl-Tastverhältnis-Kennfeld festgelegt, das bspw. den in Fig. 3 dargestellten Verlauf hat. Das System aus dem Elektromotor M, einem Lüfter und der Luftströmung weist nichtlineare Eigenschaften auf, die großen Streuungen unterliegen. Der tatsächliche Verlauf der Motordrehzahl kann daher auch bei identischen Motortypen stark von einer Idealkennlinie abweichen.

Hierbei zeigt die Kennlinie b in Fig. 3 den einfachsten Fall einer Drehzahl-Tastverhältnis-Kennlinie, bei der eine lineare Abhängigkeit der Drehzahl n vom Tastverhältnis TV angenommen wird. Kennlinien a und c zeigen Beispiele für der nichtlinearen Charakteristik des jeweiligen Elektromotors entsprechende Kennlinien, wobei Kennlinie a einen Lüftermotor beschreibt, bei dem die Drehzahl für einen gegebenen Anstieg des Tastverhältnisses schneller ansteigt als bei dem durch Kennlinie c beschriebenen Lüftermotor. Somit kann durch das Bereitstellen eines an den jeweiligen Elektromotor M angepassten Drehzahl-Tastverhältnis-Kennfelds die Belastung des Elektromotors M in der Beschleunigungsphase minimiert werden, da die aus dem Kennfeld bestimmte Drehzahl an die jeweilige Motorcharakteristik angepasst ist.

Das Drehzahl-Tastverhältnis-Kennfeld ist in der Kennfeldeinheit 12 abgespeichert. Die Kennfeldeinheit 12 kann mit der Steuereinheit 10 integriert sein, wie in Fig. 1 dargestellt, kann aber auch ein externes Speichermedium umfassen, das von der Steuereinheit 10 ausgelesen werden kann. Die Kennfeldeinheit 12 kann das Drehzahl-Tastverhältnis-Kennfeld in Form einer Look-up-Tabelle, in Form einer mathematischen Funktionsbeschreibung und dergleichen beschreiben.

Die Drehzahl n des Elektromotors M wird gemessen, z. B. mittels einer Lichtschranke oder mittels eines Hallsensors oder mittels der Auswertung von Spannungsrippeln. Die so ermittelte Drehzahl wird zu festgelegten Zeitpunkten oder in festgelegten Zeitintervallen an die Differenzeinheit 14 ausgegeben. Weiterhin erhält die Differenzeinheit 14 zu festgelegten Zeitpunkten oder in festgelegten Zeitintervallen eine Drehzahl n_{KF}=f(TV_{A}) aus der Kennfeldeinheit 12 gemäß der im Voraus abgespeicherten Motorcharakteristik.

Aus der gemessenen Drehzahl n und der aus dem Kennfeld für das anliegende Tastverhältnis TV_{A} bestimmten Drehzahl n_{KF} bestimmt die Differenzeinheit 14 eine Angabe über eine Drehzahlabweichung Δn/n_{KF}. Die Angabe über die Drehzahlabweichung kann neben der Differenz zwischen der mit Hilfe des Kennfelds ermittelten Drehzahl n_{KF} und der Ist-Drehzahl n alternativ auch als deren Verhältnis oder mit Hilfe einer anderen eine Abweichung angebenden Funktion der beiden Drehzahlwerte n und n_{KF} bestimmt sein.

Die Korrekturwert-Bestimmungseinheit 16 bestimmt aus der von der Differenzeinheit 14 ausgegebenen Drehzahlabweichung Δn/n_{KF} einen Korrekturwert K_{Steigung} zur Korrektur des zeitlichen Verlaufs des Tastverhältnisses TV.

Die Rampeneinheit 18 erhält ein von außen vorgegebenes Ziel-Tastverhältnis TV_{Ziel}, das für den Dauerbetrieb des Elektromotors M erreicht werden soll. Eine Anfangsvorgabe für den zeitlichen Verlauf (ΔTV/Δt)_{Soll} des Tastverhältnisses TV ist im Voraus in der Rampeneinheit 18 abgespeichert oder kann ebenfalls von außen vorgegeben sein. Beispielsweise kann ein Wert für eine konstante Steigung (ΔTV/Δt)_{Soll} als Anfangsvorgabe in der Rampeneinheit 18 abgespeichert sein, z.B. 10%/sek. Alternativ kann die Anfangsvorgabe als eine Zeitvorgabe für den Anfahrvorgang von außen vorgegeben werden, aus der die Rampeneinheit 18 dann eine konstante Steigung (ΔTV/Δt)_{Soll} berechnet, mit der das Ziel-Tastverhältnis TV_{Ziel} in der vorgegebenen Zeit erreicht werden kann.

Die Rampeneinheit 18 stellt intern das sich mit der konstanten Steigung (ΔTV/Δt)_{Soll} ändernde Tastverhältnis TV bereit, wenn bzw. solange das momentane Tastverhältnis TV kleiner ist als das von außen vorgegebene Ziel-Tastverhältnis TV_{Ziel} und stellt analog das sich mit einer negativen konstanten Steigung - (ΔTV/Δt)_{Soll} ändernde Tastverhältnis TV bereit, wenn bzw. solange das momentane Tastverhältnis TV größer ist als das von außen vorgegebene Ziel-Tastverhältnis TV_{Ziel}. Ist das von außen vorgegebene Ziel-Tastverhältnis TV_{Ziel} erreicht, so bleibt das Tastverhältnis TV konstant.

Weiterhin erhält die Rampeneinheit 18 von der Korrekturwert-Bestimmungseinheit 16 den Korrekturwert K_{Steigung}, mit dem die Anfangsvorgabe für den zeitlichen Verlauf (ΔTV/Δt)_{Soll} modifiziert wird, beispielsweise durch Multiplikation mit dem Korrekturwert K_{Steigung}.

Bei dieser Ausführungsform der vorliegenden Erfindung wird die Steigung ΔTV/Δt mit Hilfe des Korrekturwerts erhöht, wenn die Drehzahl n des Elektromotors M größer ist als die aus dem Kennfeld bestimmte Drehzahl n_{KF}. Die Steigung ΔTV/Δt wird verringert, wenn die Drehzahl n des Elektromotors M kleiner ist als die aus dem Kennfeld bestimmte Drehzahl n_{KF}.

Hierdurch kann die Beschleunigungsdauer des Elektromotors M minimiert werden, da bei einer Ist-Drehzahl n, die schneller ansteigt als vom Drehzahl-Tastverhältnis-Kennfeld vorgegeben, die Steigung ΔTV/Δt des Tastverhältnisses erhöht wird und somit das Ziel-Tastverhältnis TV_{Ziel} und die dem Ziel-Tastverhältnis TV_{Ziel} zugeordnete Betriebsdrehzahl des Elektromotors M schneller erreicht werden können. Gleichzeitig werden die Belastungen des Elektromotors M und des Bordnetzes minimiert, da bei einer Ist-Drehzahl n, die langsamer ansteigt als durch das Drehzahl-Tastverhältnis-Kennfeld vorgegeben, die Steigung ΔTV/Δt des Tastverhältnisses TV verringert wird, um einen beispielsweise durch eine ungünstige Luftströmungsdynamik schlechter beschleunigenden Elektromotor M sanfter anlaufen zu lassen.

Mit der derart angepassten Steigung ΔTV/Δt berechnet die Rampeneinheit 18 ein Ansteuer-Tastverhältnis TV_{A} als Ansteuergröße zum Ansteuern des Motors M und gibt dieses an die Modulationseinheit 20 aus, die das Ansteuer-Tastverhältnis TV_{A} in ein pulsweitenmoduliertes Spannungssignal umwandelt und an den Elektromotor M ausgibt.

Weiterhin gibt die Rampeneinheit 18 das anliegende Ansteuer-Tastverhältnis TV_{A} an die Kennfeldeinheit 12 aus, die damit die Drehzahl n_{KF} gemäß dem Drehzahl-Tastverhältnis-Kennfeld bestimmt.

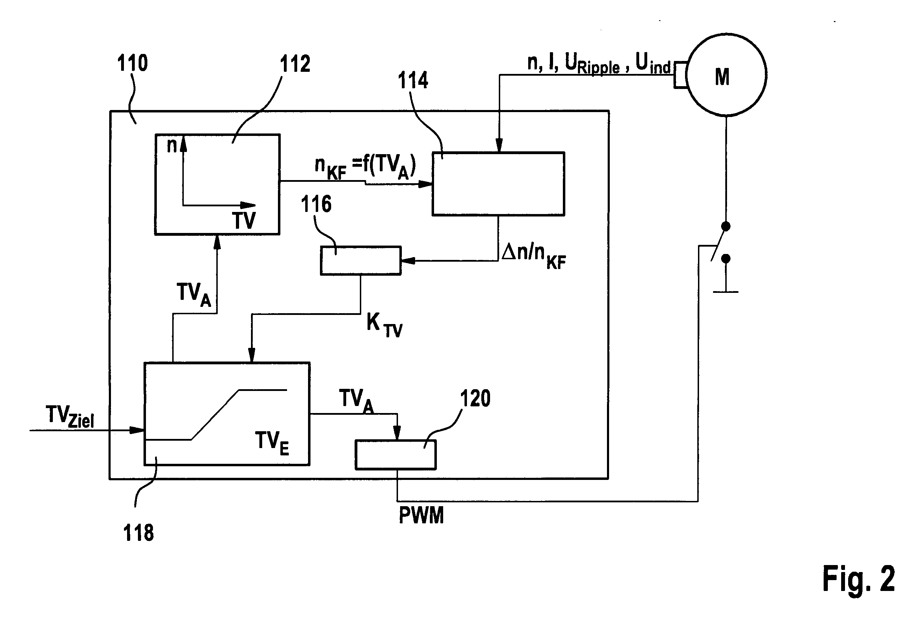

In Fig. 2 ist ein weiteres Motorsystem mit dem Elektromotor M und einer Steuereinheit 110 zum Ansteuern des Elektromotors M gezeigt.

Die Steuereinheit 110 umfasst, wie bezüglich des Motorsystems der Fig. 1 dargestellt, eine Kennfeldeinheit 112 für ein Kennfeld, das eine Abhängigkeit der Drehzahl n vom Tastverhältnis TV des pulsweitenmodulierten Spannungssignals angibt, eine Differenzeinheit 114 zum Bestimmen einer Abweichung Δn/n_{KF} der Ist-Drehzahl n von der im Kennfeld für das anliegende Tastverhältnis gespeicherten Drehzahl n_{KF}, eine Korrekturwert-Bestimmungseinheit 116 zum Bestimmen eines Korrekturwerts K_{TV} für das Tastverhältnis in Abhängigkeit von der Drehzahlabweichung, eine Rampeneinheit 118 zum Berechnen einer Rampenfunktion, die einen zeitlichen Verlauf des Tastverhältnisses TV in der Beschleunigungsphase des Elektromotors M angibt und eine Modulationseinheit 120 zum Umwandeln des von der Rampeneinheit 118 ausgegebenen Tastverhältnisses TV_{A} in ein pulsweitenmoduliertes Spannungssignal PWM, mit dem der Elektromotor M angesteuert wird.

Die Differenzeinheit 114 der zweiten Ausführungsform bestimmt eine Drehzahlabweichung Δn/n_{KF} wie vorstehend in Zusammenhang mit dem Motorsystem der Fig. 1 beschrieben und gibt diese an die Korrekturwert-Bestimmungseinheit 116 aus.

Die Korrekturwert-Bestimmungseinheit 116 bestimmt aus der von der Differenzeinheit 114 ausgegebenen Drehzahlabweichung Δn/n_{KF} einen Korrekturwert K_{TV} zur Korrektur des Tastverhältnisses TV.

Die Rampeneinheit 118 erhält ein von außen vorgegebenes Ziel-Tastverhältnis TV_{Ziel}, das für den Betrieb des Elektromotors M erreicht werden soll. Eine Anfangsvorgabe für den zeitlichen Verlauf (ΔTV/Δt)_{Soll} des Tastverhältnisses ist im Voraus in der Rampeneinheit 118 abgespeichert oder kann ebenfalls von außen vorgegeben sein. Beispielsweise kann ein Wert für eine konstante Steigung (ΔTV/Δt)_{Soll} als Anfangsvorgabe in der Rampeneinheit 118 abgespeichert sein, oder eine Zeitvorgabe für den Anfahrvorgang kann von außen vorgegeben werden, aus der die Rampeneinheit dann eine konstante Steigung (ΔTV/Δt)_{Soll} berechnet, mit der das Ziel-Tastverhältnis TV_{Ziel} in der vorgegebenen Zeit erreicht werden kann. Zu vorgegebenen Zeitpunkten oder in vorgegebenen Zeitintervallen bestimmt die Rampeneinheit 118 einen Sollwert TV_{E} für das Tastverhältnis TV gemäß der Anfangsvorgabe für den zeitlichen Verlauf (ΔTV/Δt)_{Soll} des Tastverhältnisses.

Dieser Sollwert TV_{E} für das Tastverhältnis wird dann in der Rampeneinheit 118 in Abhängigkeit von dem von der Korrekturwert-Bestimmungseinheit 116 bestimmten Korrekturwert K_{TV} korrigiert, um das Ansteuer-Tastverhältnis TV_{A} zu erhalten. Das Ansteuer-Tastverhältnis TV_{A} wird an die Modulationseinheit 120 ausgegeben, die es in ein pulsweitenmoduliertes Spannungssignal PWM umwandelt und an den Elektromotor M ausgibt.

Bezüglich der Generierung des Verlaufs des Tastverhältnisses TV arbeitet die Rampeneinheit 118 des Motorsystems der Fig. 2 vergleichbar zu der Rampeneinheit 18 des Motorsystems der Fig. 1.

Die gegenüber der Anfangsvorgabe für die Steigung (ΔTV/Δt)_{Soll} geänderte zeitliche Änderungsrate des korrigierten Tastverhältnisses TV_{A} wird hierbei nicht gesondert bestimmt. In Abhängigkeit von der zeitlichen Änderung der Drehzahlabweichung Δn/n_{KF} ergibt sich jedoch auch bei dieser Ausführungsform für das Ansteuer-Tastverhältnis TV_{A} eine zeitliche Änderung der Steigung ΔTV/Δt gegenüber der Anfangsvorgabe (ΔTV/Δt)_{Soll}.

Wenn die gemessene Ist-Drehzahl n größer ist als nach dem Drehzahl-Tastverhältnis-Kennfeld vorgegeben, dann wird das Ansteuer-Tastverhältnis TV_{A} erhöht. Wenn die gemessene Ist-Drehzahl n kleiner ist als nach der Drehzahl-Tastverhältnis-Funktion vorgegeben, dann wird das Ansteuer-Tastverhältnis TV_{A} kleiner gewählt. Auch bei diesem Motorsystem können daher die gleichen Vorteile erzielt werden, wie in Zusammenhang mit dem Motorsystem der Fig. 1 beschrieben.

Die Rampeneinheit 118 gibt weiterhin das Ansteuer-Tastverhältnis TV_{A} auch an die Kennfeldeinheit 112 aus, die daraus die Drehzahl n_{KF} gemäß dem Drehzahl-Tastverhältnis-Kennfeld bestimmt.

Fig. 4 zeigt einen beispielhaften zeitlichen Verlauf des gemäß dem erfindungsgemäßen Verfahren ausgegebenen Ansteuer-Tastverhältnisses TV_{A}. Hierbei ist TV_{E} das Tastverhältnis gemäß der Anfangsvorgabe für einen zeitlichen Verlauf (ΔTV/Δt)_{Soll} des Tastverhältnisses, das in diesem Beispiel eine konstante Änderungsrate (ΔTV/Δt)_{Soll} aufweist.

TV_{A} wird hierbei gemäß der ersten Ausführungsform in der Rampeneinheit 18 durch TV_{A} = TV₀ + K_{Steigun}g * (ΔTV/Δt)_{Soll} * t bestimmt, wobei TV₀ das Tastverhältnis zu Beginn des Anfahrvorgangs des Elektromotors M ist (z.B. 0%). In dem Motorsystem der Fig. 2 wird TV_{A} = K_{TV} * TV_{E} bestimmt. Bei dem Motorsystem der Fig. 1 wird dagegen die Steigung des anliegenden Tastverhältnisses gemäß der Drehzahlabweichung korrigiert, während bei dem Motorsystem der Fig. 2 das gemäß einer Anfangsvorgabe für die Steigung (ΔTV/Δt)_{Soll} bestimmte Tastverhältnis TV_{E} in Abhängigkeit von der Drehzahlabweichung korrigiert wird.

Die voranstehend beschriebenen Ausführungsformen stellen nur Beispiele dar und verschiedene Modifikationen sind denkbar.

Alternativ oder zusätzlich zu der Drehzahl kann auch ein Motorstrom I als Motorgröße gemessen bzw. geschätzt und an die Differenzeinheit 14 bereitgestellt werden. In diesem Fall kann anstelle der Drehzahl auch der Motorstrom I als Motorgröße zur Anpassung des Tastverhältnisses verwendet werden, wobei dann in der Kennfeldeinheit 12 bzw. 112 ein Motorstrom-Tastverhältnis-Kennfeld hinterlegt ist und in der Differenzeinheit 14 bzw. 114 eine Abweichung ΔI/I_{KF} des ist-Motorstroms I von dem sich für das Ansteuer-Tastverhältnis TV_{A} aus dem Motorstrom-Tastverhältnis-Kennfeld ergebenden Motorstrom bestimmt wird.

Es können ferner sowohl die Drehzahl als auch der Motorstrom als Motorgröße zur Anpassung des Tastverhältnisses verwendet werden, wobei in der Kennfeldeinheit 12 bzw. 112 sowohl ein Drehzahl-Tastverhältnis-Kennfeld wie auch ein Motorstrom-Tastverhältnis-Kennfeld hinterlegt sind. Dadurch können sich kombinierte Bedingungen ergeben: Wenn die Drehzahl n unterhalb der Drehzahl-Tastverhältnis-Kennlinie liegt und der Motorstrom I oberhalb der Motorstrom-Tastverhältnis-Kennlinie, dann wird ΔTV/Δt verkleinert (bspw. halbiert).

Ferner kann auch die Generatorspannung oder die Rippelspannung U_{Ripple} als Motorgröße zur Anpassung des Tastverhältnisses verwendet werden, wobei auch hier kombinierte Bedingungen unter Berücksichtigung der Drehzahl und der Generatorspannung bzw. U_{Ripple} denkbar sind.

Die vorliegende Erfindung ist nicht auf die Ansteuerung eines Motors mit einem pulsweitenmodulierten Spannungssignal mit sich änderndem Tastverhältnis beschränkt. Anstelle einer Änderung des Tastverhältnisses kann auch allgemein eine anliegende effektive Spannung durch andere Maßnahmen geändert werden.

Weiterhin ist das erfindungsgemäße Verfahren nicht auf einen Anlaufvorgang des Elektromotors M beschränkt, sondern kann immer dann eingesetzt werden, wenn die Drehzahl n des Elektromotors M geändert werden soll. Somit kann auch beim Herunterfahren oder bei einer Drehzahländerung während des Betriebs eine zeitliche Änderungsrate des Tastverhältnisses erfindungsgemäß entsprechend der Motordrehzahl n korrigiert werden.

## Patentansprüche

1. Verfahren zur Ansteuerung eines Elektromotors (M), insbesondere in einem Lüfter, mittels einer Ansteuergröße (TV_{A}) , mit folgenden Schritten:
- Bereitstellen einer Stellgröße (TV), die einen zeitlichen Verlauf ((ΔTV/Δt)_{Soll}) aufweist;
- Bestimmen eines Korrekturwerts (K_{Steigung}) K_{TV}); und
- Anpassen des zeitlichen Verlaufs der Stellgröße (TV) abhängig von dem Korrekturwert (K_{Steigung}, K_{TV})_{.} um die Ansteuergröße (TV_{A}) zu erhalten, **dadurch gekennzeichnet, dass**
der Korrekturwert (K_{Steigung}) K_{TV}) abhängig von einer vorgegebenen Motorcharakteristik, die eine Abhängigkeit einer Motorgröße (n, I) von der Ansteuergröße (TV_{A}) beschreibt, und abhängig von der Ansteuergröße (TV_{A}) bestimmt wird.

2. Verfahren nach Anspruch 1, **dadurch gekennzeichnet, dass** die Stellgröße (TV) ein Tastverhältnis eines pulsweitenmodulierten Spannungssignals (PWM) umfasst.

3. Verfahren nach einem der vorangehenden Ansprüche, **dadurch gekennzeichnet, dass** die Motorgröße (n, I) eine Drehzahl (n) des Elektromotors (M), einen Motorstrom (I) oder eine Funktion der Drehzahl (n) und des Motorstroms (I) umfasst.

4. Verfahren nach einem der vorangehenden Ansprüche, **dadurch gekennzeichnet, dass** der Korrekturwert (K_{Steigung}, K_{TV}) von einer Differenz, einem Verhältnis oder einer Funktion einer Ist-Motorgröße (n, I) und der bei der Ansteuergröße (TV_{A}) gemäß der Motorcharakteristik sich ergebenden Motorgröße (n_{KF}, I_{KF}) abhängt.

5. Verfahren nach einem der vorangehenden Ansprüche, **dadurch gekennzeichnet, dass** die Motorgröße eine Drehzahl (n) des Elektromotors (M) umfasst, und dass die zeitliche Änderungsrate der Stellgröße (TV) erhöht wird, wenn die sich aus der Motorcharakteristik für das anliegende Tastverhältnis ergebende Drehzahl (n_{KF}) höher ist als die gemessene Ist-Drehzahl (n) des Elektromotors (M).

6. Steuerungseinrichtung (10, 110) zum Ansteuern eines Elektromotors (M) mittels einer Ansteuergröße (PWM), umfassend:
- eine Kennfeldeinheit (12, 112), in der eine vorgegebene Motorcharakteristik, die eine Abhängigkeit einer Motorgröße (n, I) von einer Ansteuergröße (TV_{A}) beschreibt, bereitgestellt ist;
- eine Korrekturwert-Bestimmungseinheit (16, 116) zum Bestimmen eines Korrekturwerts (K_{Steigung}, K_{TV}) abhängig von der Motorcharakteristik und abhängig von der Ansteuergröße (PWM); und
- eine Rampeneinheit (18, 118) zum Anpassen eines vorgegeben zeitlichen Verlaufs ((ΔTV/Δt_{Soll})) der Stellgröße (TV) abhängig von dem Korrekturwert (K_{Steigung}, K_{TV}), um die Ansteuergröße (PWM) zu erhalten.

7. Computerprogramm, das, wenn es auf einer Steuerungseinrichtung für einen Elektromotor (M) ausgeführt wird, das Verfahrens nach einem der Ansprüche 1 bis 5 durchführt.

## Claims

1. Method for controlling an electric motor (M), in particular in a fan, by means of a control variable (TV_{A}), comprising the following steps:
- providing an actuating variable (TV) which has a time profile ((ΔTV/Δt)ₛₑₜ) ;
- determining a correction value (K_{increase}, K_{TV}) ; and
- adjusting the time profile of the actuating variable (TV) as a function of the correction value (K_{increase}, K_{TV}) in order to obtain the control variable (TV_{A}),
**characterized in that**
the correction value (K_{increase}, K_{TV}) is determined as a function of a predefined motor characteristic, which describes a dependency of a motor variable (n, I) on the control variable (TV_{A}), and as a function of the control variable (TV_{A}).

2. Method according to Claim 1, **characterized in that** the actuating variable (TV) comprises a duty cycle of a pulse-width-modulated voltage signal (PWM).

3. Method according to either of the preceding claims, **characterized in that** the motor variable (n, I) comprises a rotation speed (n) of the electric motor (M), a motor current (I), or a function of the rotation speed (n) and of the motor current (I).

4. Method according to one of the preceding claims, **characterized in that** the correction value (K_{increase}, K_{TV}) depends on a difference, a ratio or a function of an actual motor variable (n, I) and the motor variable (n_{KF}, I_{KF}) which is produced according to the motor characteristic given the control variable (TV_{A}).

5. Method according to one of the preceding claims, **characterized in that** the motor variable comprises a rotation speed (n) of the electric motor (M), and **in that** the rate of change in the actuating variable (TV) with respect to time is increased when the rotation speed (n_{KF}) which is given by the motor characteristic for the existing duty cycle is higher than the measured actual rotation speed (n) of the electric motor (M).

6. Control device (10, 110) for controlling an electric motor (M) by means of a drive variable (PWM), comprising:
- a characteristic map unit (12, 112) in which a predefined motor characteristic is provided, said motor characteristic describing a dependency of a motor variable (n, I) on a control variable (TV_{A});
- a correction value determination unit (16, 116) for determining a correction value (K_{increase}, K_{TV}) as a function of the motor characteristic and as a function of the control variable (PWM); and
- a ramp unit (18, 118) for adjusting a predefined time profile ((ΔTV/Δtₛₑₜ)) of the actuating variable (TV) as a function of the correction value (K_{increase}, K_{TV}) in order to obtain the control variable (PWM).

7. Computer program which, when run on a control device for an electric motor (M), carries out the " method according to one of Claims 1 to 5.

## Revendications

1. Procédé de commande d'un moteur électrique (M), en particulier d'un ventilateur, au moyen d'une grandeur de commande (TV_{A}) , le procédé comportant les étapes suivantes :
préparer une grandeur de réglage (TV) qui présente une évolution temporelle ((ΔTV/Δt)_{Soll}) ,
déterminer une valeur de correction (K_{Steigung}, K_{TV}) et
adapter l'évolution temporelle de la grandeur de réglage (TV) en fonction de la valeur de correction (K_{Steigung}, K_{TV}) pour obtenir la grandeur de commande (TV_{A}),
le procédé étant **caractérisé en ce que**
la valeur de correction (K_{Steigung}, K_{TV}) est déterminée en fonction d'une caractéristique prédéterminée du moteur qui décrit la dépendance d'une grandeur (n, I) du moteur vis-à-vis de la grandeur de commande (TV_{A}) et en fonction de la grandeur de commande (TV_{A}).

2. Procédé selon la revendication 1, **caractérisé en ce que** la grandeur de réglage (TV) comporte un rapport de palpage d'un signal de tension (PMM) en impulsions de largeur modulée.

3. Procédé selon l'une des revendications précédentes, **caractérisé en ce que** la grandeur (n, I) du moteur comporte la vitesse de rotation (n) du moteur électrique (M), le courant (I) du moteur ou une fonction de la vitesse de rotation (n) et du courant (I) du moteur.

4. Procédé selon l'une des revendications précédentes, **caractérisé en ce que** la valeur de correction (K_{Steigung}, K_{TV}) dépend d'une différence, d'un rapport ou d'une fonction d'une grandeur effective (n, I) du moteur et de la grandeur (n_{KF}, I_{KF}) du moteur qui résulte de la grandeur de commande (TV_{A}) selon la caractéristique du moteur.

5. Procédé selon l'une des revendications précédentes, **caractérisé en ce que** la grandeur du moteur comporte la vitesse de rotation (n) du moteur électrique (M) et **en ce que** le taux de variation dans le temps de la grandeur de réglage (TV) est augmenté si la vitesse de rotation (n_{KF}) qui résulte de la caractéristique du moteur pour le rapport de palpage appliqué est supérieure à la vitesse de rotation effective (n) mesurée sur le moteur électrique (M).

6. Dispositif de commande (10, 110) destiné à commander un moteur électrique (M) au moyen d'une grandeur de commande (PWM), le dispositif comportant :
une unité (12, 112) à champ de caractéristiques dans laquelle une caractéristique prédéterminée du moteur qui décrit une dépendance d'une grandeur (n, I) du moteur vis-à-vis d'une grandeur de commande (TV_{A}) est formée,
une unité (16, 116) de détermination de valeurs de correction qui détermine une valeur de correction (K_{Steigung}, K_{TV}) en fonction de la caractéristique du moteur et en fonction de la grandeur de commande (PWM) et
une unité de rampe (18, 118) qui adapte une évolution temporelle ((ΔTV/Δtₛₒₗₗ)) prédéterminée de la grandeur de réglage (TV) en fonction de la valeur de correction (K_{Steigung}, K_{TV}) pour obtenir la grandeur de commande (PWM).

7. Programme informatique qui, lorsqu'il est exécuté sur un dispositif de commande de moteur électrique (M), met en oeuvre le procédé selon l'une des revendications 1 à 5.
